# EUROPÄISCHE PATENTANMELDUNG

(11) **EP 1 040 947 A2**
(43) Veröffentlichungstag der Anmeldung: **04.10.2000**
(21) Anmeldenummer: 00106946.7
(22) Anmeldetag: 31.03.2000
(51) Int. Cl.: B60H 1/00, B60H 1/32

(54) **Fahrzeugklimaanlage**

(30) Priorität: 01.04.1999 DE 19915048
(71) Anmelder: Otto Egelhof GmbH & Co., 70736 Fellbach (DE)
(72) Erfinder: Schaffranietz, Uwe, Dr., 70734 Fellbach (DE)
(74) Vertreter: Manitz, Finsterwald & Partner

(57) **Zusammenfassung**

Fahrzeugklimaanlage mit einem Kältekreislauf (12) zur Zirkulation eines Kältemittels zwischen einer Wärmeaufnahmestelle im Inneren (1) des Fahrzeuges und einer Wärmeabgabestelle im Außenraum (3) des Fahrzeuges oder umgekehrt, wobei zur Verringerung der Gefahr einer Gefährdung der Insassen des Fahrzeuges mindestens eine Schnellablaßvorrichtung (13) vorgesehen ist zum Ablassen des Kältemittels aus dem Kältekreislauf (12) in den Fahrzeugaußenraum (3) sowie Mittel zur automatischen Betätigung der Schnellablaßvorrichtung (13) im Falle einer Beschädigung, insbesondere einer Leckage des Kältekreislaufs (12).

## Beschreibung

Die vorliegende Erfindung betrifft eine Fahrzeugklimaanlage mit einem Kältekreislauf zur Zirkulation eines Kältemittels zwischen einer Wärmeaufnahmestelle im Inneren des Fahrzeuges und einer Wärmeabgabestelle im Außenraum des Fahrzeuges oder umgekehrt.

In Fahrzeugen werden in zunehmendem Maße Klimaanlagen eingesetzt, um den Komfort für die Insassen zu erhöhen. Diese Anlagen basieren häufig auf einem Kältekreislauf, bei dem Kältemittel in einem Verdampfer verdampft und so den Fahrzeuginnenraum kühlt. Bei einer Leckage oder anderen Störfällen stellt das Entweichen des Kältemittels in den Fahrzeuginnenraum für die Insassen ein gewisses Gefährungspotential dar.

Um eine Gefährdung der Insassen durch entweichendes Kältemittel zu vermeiden, wurde bereits vorgeschlagen, Verdichter, Kondensator und Expansionsorgan außerhalb des Fahrzeuginnenraums anzuordnen und zwischen Verdampfer und Verdichter ein zum Fahrzeugaußenraum öffnendes Rückschlagventil vorzusehen, so daß im Fahrzeuginnenraum im wesentlichen nur der Verdampfer angeordnet ist. Tritt bei einer solchen Anordnung während des Stillstandes des Verdichters eine Leckage oder Beschädigung des Verdampfers auf, fällt der Systemdruck des Kältekreislaufes ab. Das Rückschlagventil in der Saugleitung schließt und das Expansionsorgan oder ein Magnetventil in der Verdampferzuleitung ist ebenfalls geschlossen. In den Fahrzeuginnenraum kann daher nur die Kältemittelmenge gelangen, die sich in der Rohrleitung zwischen Expansionsventil und Verdampfer, im Verdampfer selbst und in der Rohrleitung zwischen Verdampfer und Rückschlagventil befindet. Die restliche Kältemittelmenge im Kondensator, im Verdichter und in den zugehörigen Rohrleitungen wird außerhalb des Fahrzeuginnenraums zurückgehalten. Wenn der Verdichter Kältemittel fördert, ergibt sich eine entsprechende Funktionsweise mit der Ausnahme, daß der Verdichter über das Rückschlagventil weiter Kältemittel aus dem Verdampferbereich absaugt.

Durch diese Anordnung kann die in den Fahrzeuginnenraum entweichende Kältemittelmenge reduziert werden. Ein Teil der Kältemittelmenge kann jedoch in den Fahrzeuginnenraum entweichen. Außerdem sind bei dieser Anordnung an das Rückschlagventil und an das Expansions- bzw. Magnetventil hohe Dichtheitsanforderungen zu stellen.

Der Erfindung liegt die Aufgabe zugrunde, eine Fahrzeugklimaanlage anzugeben, bei welcher die Gefährdung der Insassen durch Entweichen des Kältemittels weiter reduziert ist.

Diese Aufgabe wird dadurch gelöst, daß mindestens eine Schnellablaßvorrichtung vorgesehen ist zum Ablassen des Kältemittels aus dem Kältekreislauf in den Fahrzeugaußenraum sowie Mittel zur automatischen Betätigung der Schnellablaßvorrichtung im Falle einer Beschädigung, insbesondere einer Leckage des Kältekreislaufs.

Durch das schnelle Ablassen des Kältemittels aus dem Kältekreislauf in den Fahrzeugaußenraum kann bei einer Leckage im Verdampfer oder einem sonstigen Schaden nur noch eine kleine Kältemittelmenge in den Fahrzeuginnenraum gelangen. Der überwiegende Teil des Kältemittels wird in die Umgebung abgeführt und dadurch eine Gefährdung von Insassen im Fahrgastraum durch hohe Kältemittelkonzentrationen vermieden. Neben dieser Reduzierung der in den Fahrzeuginnenraum gelangenden Kältemittelmenge hat die Erfindung zudem den Vorteil, daß kein Rückschlagventil erforderlich ist, und daß die hohen Anforderungen an die Dichtheit des Expansions- oder Magnetventils in der Verdampferzuleitung entfällt.

Bevorzugt umfaßt die Schnellablaßvorrichtung ein elektromagnetisch betätigbares Ventil. Damit kann die Schnellablaßvorrichtung schnell und sicher betätigt werden.

Nach einer weiteren Ausgestaltung der Erfindung sind die Betätigungsmittel durch ein externes Steuersignal aktivierbar. Insbesondere kann das Steuersignal durch mindestens einen Kältemittelsensor, Drucksensor oder Temperatursensor erzeugt werden. Dabei kann das Steuersignal in Abhängigkeit vom Absolutwert und/oder der zeitlichen Änderung einer oder mehrerer Meßgrößen erzeugt werden. Die Erzeugung des Steuersignals kann dadurch den Erfordernissen optimal angepaßt werden, und die Betriebssicherheit der Anordnung wird erhöht. Detektiert beispielsweise ein Kältemittelsensor Kältemittel im Fahrzeuginnenraum oder in der Nähe des Verdampfers, kann auf eine Leckage oder einen Defekt der Kälteanlage geschlossen und die Schnellablaßvorrichtung zum Ablassen des Kältemittels in die Umgebung angesteuert werden.

Nach einer weiteren Ausgestaltung der Erfindung ist mindestens eine Schnellablaßvorrichtung in ein Bauelement des Kältekreislaufs integriert. Beispielsweise kann eine Schnellablaßvorrichtung in den Verdampfer, in den Kondensator, in den Verdichter, in einen Sammelbehälter wie Receiver oder Akkumulator, in einen gegebenenfalls vorhandenen Trockner oder einen inneren Wärmetauscher integriert sein. Die Integration hat den Vorteil, daß Bauraum und Bauelemente eingespart werden.

Nach einer weiteren Ausgestaltung der Erfindung ist mindestens eine Schnellablaßvorrichtung mit einem Funktionselement des Kältekreislaufs kombiniert. Auch dies hat den Vorteil, daß Bauelemente eingespart werden.

Beispielsweise kann eine Schnellablaßvorrichtung mit einem Expansionsventil des Kältekreislaufs kombiniert sein. Dabei kann das Expansionsventil insbesondere einen beweglichen Schließkörper aufweisen, über dessen Bewegung das Öffnen und Schließen der Schnellablaßvorrichtung betätigbar ist. Der Schließkörper dient dabei vorteilhafterweise also zugleich zur Einstellung des Durchlaßquerschnittes des Expansionsventils und zur Betätigung der Schnellablaßvorrichtung.

Eine Schnellablaßvorrichtung kann auch mit einer Überdrucksicherung kombiniert sein. Dabei ist es besonders vorteilhaft, wenn Überdrucksicherung und Schnellablaßvorrichtung mit einem Expansionsventil kombiniert sind. Damit sind drei Funktionen in einem Bauelement vereint, was besonders platzsparend ist und Bauelemente einspart.

Nach einer weiteren Ausgestaltung der Erfindung weist die Schnellablaßvorrichtung an der Austrittsstelle des Kältemittels eine Venturi-Düse auf. Hierdurch kann die Gefahr eines Vereisens der Austrittsstelle des Kältemittel im Falle eines Schnellablassens verringert werden. Eine vor der Austrittsöffnung angebrachte Blende verhindert, daß abgelassenes Kältemittel unkontrolliert abströmt und eine Verletzungsgefahr darstellt.

Eine andere Möglichkeit zur Verringerung der Gefahr eines Vereisens der Austrittsstelle des Kältemittels im Falle eines Schnellablassens besteht darin, an dem Ausgang der Schnellablaßvorrichtung eine Leitung anzuschließen, deren anderes Ende zu einem erwärmten Fahrzeugteil geführt ist, beispielsweise zu einem Auspuffkrümmer oder Katalysator. Bei einem Unfall verhindert die Wärme des Fahrzeugteils ein Vereisen der Austrittsöffnung der Leitung. Gleichzeitig wird das Fahrzeugteil gekühlt und dadurch die Gefahr eines Fahrzeugbrandes verringert. Außerdem kann die Schnellablaßvorrichtung als Feuerlöscher eingesetzt werden, indem das abgelassene Kältemittel, insbesondere CO₂, zu einem möglichen Brandherd geführt wird.

Ausführungsbeispiele der Erfindung sind in der Zeichnung dargestellt und werden nachfolgend beschrieben. Es zeigen, jeweils ein schematischer Darstellung,
- Figur 1: den prinzipiellen Aufbau einer erfindungsgemäßen Klimaanlage,
- Figur 2: eine erste Variante einer Schnellablaßvorrichtung,
- Figur 3: eine zweite Variante einer Schnellablaßvorrichtung,
- Figur 4: eine dritte Variante einer Schnellablaßvorrichtung kombiniert mit Überdrucksicherung,
- Figur 5: eine vierte Variante einer Schnellablaßvorrichtung,
- Figur 6: die Variante von Figur 5 kombiniert mit Überdrucksicherung,
- Figur 7: eine Variante zu der Ausführung von Figur 6,
- Figur 8: eine weitere Variante der Schnellablaßvorrichtung,
- Figur 9: eine weitere Variante der Schnellablaßvorrichtung kombiniert mit Überdrucksicherung,
- Figur 10: eine Variante zu Figur 9,
- Figur 11: eine weitere Variante der Schnellablaßvorrichtung,
- Figur 12: ein Expansionsorgan mit integrierter Schnellablaßvorrichtung,
- Figur 13: ein Expansionsorgan kombiniert mit einer Schnellablaßvorrichtung,
- Figur 14: das Expansionsorgan von Figur 13 zusätzlich kombiniert mit einer Überdrucksicherung,
- Figur 15: eine Variante zu Figur 1 mit in den Kondensator und den Verdampfer integrierten Schnellablaßvorrichtungen,
- Figur 16: eine weitere Variante zu Figur 1 mit in den Verdichter integrierter Schnellablaßvorrichtung,
- Figur 17: eine weitere Variante zu Figur 1 mit in einem Akkumulator und in einen Receiver integrierten Schnellablaßvorrichtungen,
- Figur 18: eine weitere Variante zu Figur 1 mit in einen inneren Wärmetauscher integrierter Schnellablaßvorrichtung und
- Figur 19: eine weitere Variante zu Figur 1 mit in ein Umkehrventil integrierter Schnellablaßvorrichtung und
- Figur 20: eine weitere Variante zu Figur 2.

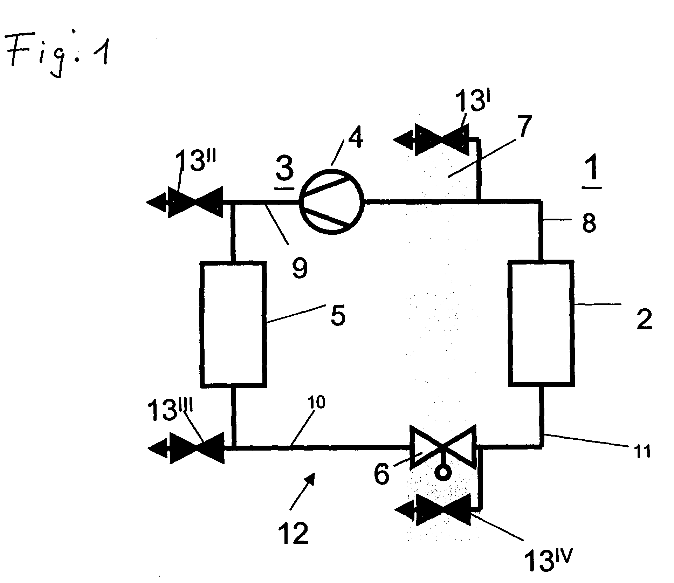

Die in Figur 1 dargestellte Klimaanlage umfaßt einen im Innenraum 1 eines Fahrzeuges angeordneten Verdampfer 2 sowie im Außenraum 3 des Fahrzeuges einen Verdichter 4, einen Kondensator 5 und ein Expansionsorgan 6. Genau genommen ist das Expansionsorgan 6 in einer Trennwand 7 zwischen Außenraum 3 und Innenraum 1 angeordnet. Es kann aber auch vor oder hinter der Trennwand angeordnet sein. Der Verdampfer 2 ist dabei über eine durch die Trennwand 7 geführte Rohrleitung 8 mit dem Verdichter 4, der Verdichter 4 über eine Rohrleitung 9 mit dem Kondensator 5, der Kondensator 5 über eine Rohrleitung 10 mit dem Expansionsorgan 6 und dieses über eine Rohrleitung 11 mit dem Verdampfer 2 verbunden, so daß insgesamt ein geschlossener Kältekreislauf 12 gebildet wird.

Der dargestellte Kältekreislauf 12 zeigt vier mögliche Einbauorte für die Schnellablaßvorrichtung 13, nämlich eine zwischen Verdampfer 2 und Verdichter 4 angeschlossene erste Schnellablaßvorrichtung 13', eine zwischen Verdichter 4 und Kondensator 5 angeschlossene zweite Schnellablaßvorrichtung 13'', eine zwischen Kondensator 5 und Expansionsorgan 6 angeschlossene dritte Schnellablaßvorrichtung 13''' und eine zwischen Expansionsorgan 6 und Verdampfer 2 angeschlossene vierte Schnellablaßvorrichtung 13''''. Die erste Schnellablaßvorrichtung 13' ist dabei in der Trennwand 7 angeordnet und mit ihrer Eingangsseite an die Rohrleitung 8 angeschlossen, während ihre Ausgangsseite in den Außenraum 3 mündet. Ebenso ist die vierte Schnellablaßvorrichtung 13'''' in der Trennwand 7 angeordnet und mit ihrer Eingangsseite an die Rohrleitung 11 angeschlossen, während ihre Ausgangsseite in den Außenraum 3 mündet. Weitere übliche Bauelemente wie Receiver, Akkumulator, sonstige Sammelbehälter, Trockner, innere Wärmetauscher und Ventile können in dem Kältekreislauf 12 zusätzlich vorhanden sein.

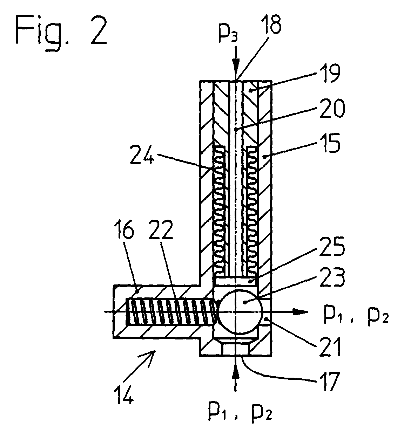

Die in Figur 2 dargestellte Schnellablaßvorrichtung umfaßt ein Gehäuse 14 in Form eines Rohrabschnitts 15 mit an einem Ende seitlich angesetztem blinden Rohrstutzen 16. An diesem Ende weist der Rohrabschnitt 15 eine erste Eingangsöffnung 17 und an seinem gegenüberliegenden Ende eine zweite Eingangsöffnung 18 auf. In die zweite Eingangsöffnung 18 ist ein Stopfen 19 mit einer zentralen Durchgangsöffnung 20 dichtend eingesetzt. Dem blinden Rohrstutzen 16 gegenüberliegend weist der Rohrabschnitt 15 außerdem eine Austrittsöffnung 21 auf.

In den blinden Rohrstutzen 16 ist eine Druckfeder 22 eingesetzt, die sich mit ihrem einen Ende an dem Boden des blinden Rohrstutzens 16 abstützt und mit ihrem anderen Ende einen Schließkörper 23 dichtend gegen die Austrittsöffnung 21 preßt. In den Rohrabschnitt 15 ist ein Federbalg 24 eingesetzt, der sich mit seinem einen Ende an dem Stopfen 19 abstützt und mit seinem anderen Ende eine in dem Rohrabschnitt 15 geführte Platte 25 gegen den Schließkörper 23 drängt. Der Federbalg umschließt dabei dichtend die Durchgangsöffnung 20 und wird selbst anderen Endes von der Platte 25 abgedichtet.

Die zweite Eingangsöffnung 18 wird mit einem Referenzdruck P₃ verbunden, und die Ausgangsöffnung 21 mit dem Außenraum 3 des Fahrzeuges. Die erste Eingangsöffnung 17 wird an den Kältekreislauf 12 angeschlossen, und zwar wahlweise an den Niederdruckabschnitt oder den Hochdruckabschnitt. Die Federkraft des Federbalges 24 ist so gewählt, daß der Schließkörper 23 bei an die erste Eingangsöffnung 17 angeschlossenen Systemdruck P₁, P₂ von der Platte 25 unbelastet ist. Bei normalem Systemdruck P₁, P₂ ist so der Kältekreislauf 12 gegenüber dem Außenraum 3 verschlossen. Fällt dagegen der Systemdruck P₁, P₂ gegenüber dem Normalwert ab, drückt die Platte 25 unter der Wirkung des Federbalges 24 und des Referenzdruckes P₃ auf den Schließkörper 23 und verschiebt diesen, so daß die Ausgangsöffnung 21 freigegeben wird und das Kältemittel über die Eingangsöffnung 23 zum Außenraum 3 entweichen kann.

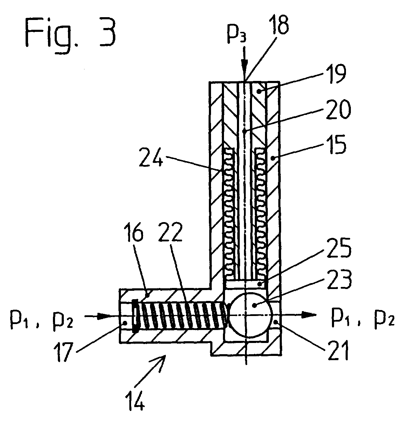

Die in Figur 3 dargestellte Variante einer Schnellablaßvorrichtung stimmt weitgehend mit der Variante in Figur 2 überein. Der einzige Unterschied besteht darin, daß die Eingangsöffnung 17 nicht an einem Ende des Rohrabschnitts 15 sondern im Boden des Rohrstutzens 16 vorgesehen ist. Bei Absinken des Systemdrucks P₁, P₂ und dadurch geöffneter Ausgangsöffnung 21 strömt das Kältemittel daher durch den seitlichen Rohrstutzen 16.

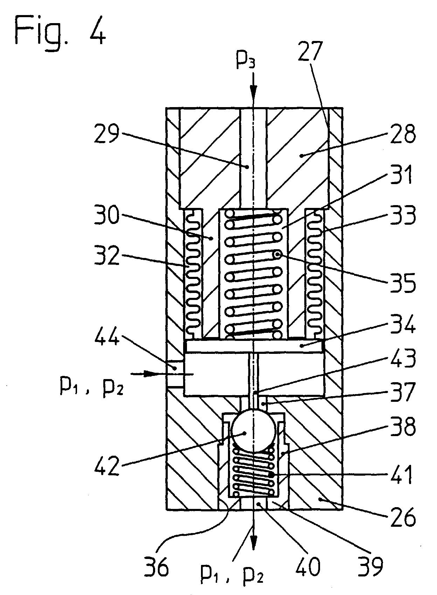

Die in Figur 4 dargestellte Schnellablaßvorrichtung umfaßt eine längliches Gehäuse 26, das eine in Längsrichtung verlaufende, zentrale Ausnehmung 27 aufweist. In die an einem Längsende des Gehäuses mündende Ausnehmung 27 ist ein Stopfen 28 mit einer zentralen Durchtrittsöffnung 29 dichtend eingesetzt. An den Stopfen 28 ist an seinem zum Gehäuseinneren weisenden Ende ein Rohrabschnitt 30 angeformt, der in seinem Inneren einen erweiterten Abschnitt 31 der Durchtrittsöffnung 29 und mit dem Gehäuse 26 einen Ringraum 32 bildet. In dem Ringraum 32 ist ein Federbalg 33 angeordnet, der sich einerseits an dem Stopfen 28 und andererseits an einer in dem Gehäuse 26 geführten Platte 34 dichtend abstützt. Alternativ oder auch zusätzlich kann in dem erweiterten Abschnitt 31 der Durchgangsöffnung 29 eine Druckfeder 35 angeordnet sein, die sich mit ihrem einen Ende an dem Stopfen 28 und mit ihrem anderen Ende an der Platte 34 abstützt.

An seinem anderen Längsende weist das Gehäuse 26 eine weitere zentrale Ausnehmung 36 auf, die mit der Ausnehmung 27 über einen kurzen Kanalabschnitt 37 verbunden ist. In die Ausnehmung 36 ist eine Hülse 38 eingesetzt, die an ihrem nach außen weisenden Ende einen Innenbund 39 aufweist, der eine Ausgangsöffnung 40 begrenzt. In die Hülse 38 ist eine Druckfeder 41 eingesetzt, die einen Schließkörper 42 gegen den Verbindungskanal 37 preßt. Gegen den Schließkörper 42 ist außerdem ein Stift 43 gerichtet, der im Zentrum der Platte 34 sitzt. Die Länge des Stiftes 43 ist dabei so bemessen, daß der Stift 43 bei Abheben der Platte 34 von dem Rohrabschnitt 30 den Schließkörper 42 von dem Durchgangskanal 37 abhebt, so daß dieser freigegeben wird. Schließlich ist in einer Seitenwand des Gehäuses 26 zwischen Stopfen 28 und Verbindungskanal 27 eine Öffnung 44 vorhanden.

Die Durchtrittsöffnung 29 in dem Stopfen 28 steht mit dem Referenzdruck P₃ und die Ausgangsöffnung 40 stehen mit dem Außenraum 3 in Verbindung. Die Öffnung 44 ist dagegen an den Kältekreislauf 12 anschließbar, und zwar wiederum an die Niederdruckseite oder an die Hochdruckseite. Die Federkraft der Druckfeder 35 oder des Federbalges 33 ist so bemessen, daß die Platte 34 bei normalem Systemdruck P₁, P₂ auf dem Rohrabschnitt 30 aufsitzt. Die Federkraft der Druckfeder 41 ist so bemessen, daß der Schließkörper 42 bei Überschreiten eines maximalen Systemdruckes P₁, P₂ von dem Verbindungskanal 37 abhebt und diesen freigibt. Tritt ein solcher Überdruck auf, wird das Kältemittel durch die Öffnung 40 in den Außenraum 3 abgeblasen. Bei normalem Systemdruck P₁, P₂ ist der Verbindungskanal 37 dagegen verschlossen und der Kältekreislauf daher nach außen abgeschlossen. Fällt der Systemdruck P₁, P₂ andererseits gegenüber dem Normaldruck ab, so verschiebt sich die Platte 34 unter der Wirkung des Referenzdruckes P₃ und der Federkraft des Federbalges 33 und/oder der Druckfeder 35. Dadurch greift der Stift 43 an dem Schließkörper 42 an und verschiebt diesen entgegen der Kraft der Druckfeder 41. Auch in diesem Fall hebt also der Schließkörper 42 von dem Verbindungskanal 37 ab und gibt diesen frei, so daß das Kältemittel zum Außenraum 3 hin abgeführt wird.

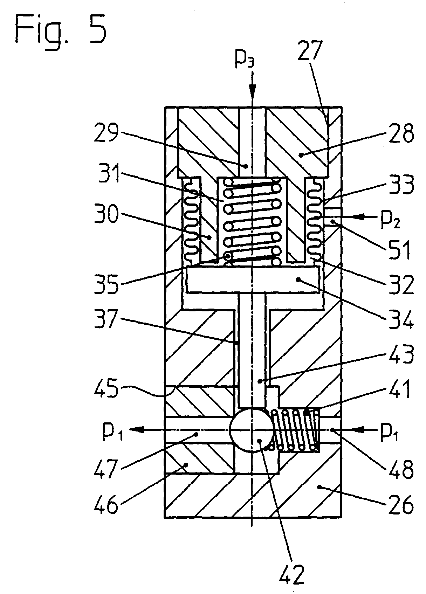

Bei der in Figur 5 gezeigten Variante ist wieder in einem länglichen Gehäuse 26 eine an einem Längsende mündende gestufte Ausnehmung 27 vorgesehen, in die ein Stopfen 28 mit einer zentralen Durchtrittsöffnung 29 dichtend eingesetzt ist. Der Verbindungskanal 37 ist nun aber von dem Stift 43 dicht verschlossen und mündet in eine quer durch das Gehäuse 26 geführte zweifach gestufte Ausnehmung 45, in deren eines Ende mit großem Querschnitt ein Stopfen 46 mit einer zentralen Durchtrittsöffnung 47 eingesetzt ist. Das andere Ende kleinen Querschnitts der Ausnehmung 45 bildet eine Eingangsöffnung 48. Dazwischen liegt ein Abschnitt mittleren Querschnitts, in welchem eine Druckfeder 41 eingesetzt ist, durch die ein Schließkörper 42 gegen den Durchtrittskanal 47 dichtend gepreßt wird. Der Stift 43 an der Platte 34 greift bei dieser Variante seitlich an dem Schließkörper 42 an. Darüber hinaus ist im Bereich des Rohrabschnitts 30 eine weitere Eingangsöffnung 51 in der Seitenwand des Gehäuses 26 vorgesehen, an die ein weiterer Systemdruck P₂ angeschlossen ist. Das heißt, an die Eingangsöffnung 48 kann beispielsweise die Niederdruckseite und an die Eingangsöffnung 51 die Hochdruckseite des Kältekreislaufs 12 angeschlossen werden. Wenn der Systemdruck P₂ absinkt, verschiebt der Stift 43 den Schließkörper 42 und gibt die Durchtrittsöffnung 47, die mit dem Außenraum 3 verbunden ist, frei. Dadurch kann der Systemdruck P₁ über die Eingangsöffnung 48 in den Außenraum 3 abgeblasen werden, wenn eine Leckage auftritt.

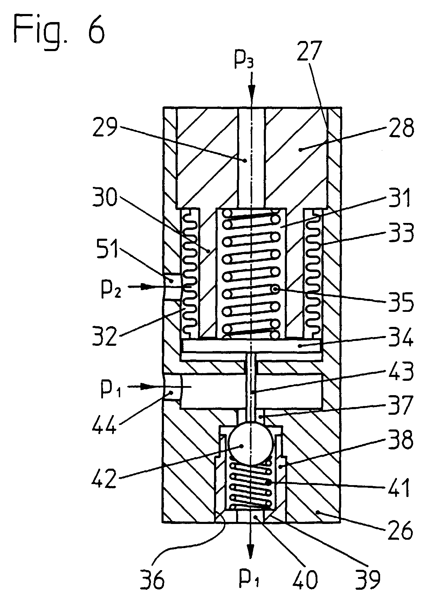

Die in Figur 6 dargestellte Variante stimmt von der Ablaßfunktion her mit der Variante von Figur 5 überein. Auch hier ist im Bereich zwischen der Platte 34 und dem Verbindungskanal 37 eine zweite seitliche Öffnung 51 im Gehäuse 26 vorgesehen und der Verbindungskanal 37 durch den Stift 43 verschlossen. Auf diese Weise können wieder zwei unterschiedliche Systemdrucke P₁, P₂ angeschlossen werden, also insbesondere die Niederdruckseite und die Hochdruckseite des Kältekreislaufs 12. Der Schließkörper 42 ist wie in Figur 4 angeordnet, ebenso die Eingangsöffnung 41. Der Schließkörper 42 hat dadurch zusätzlich die Funktion einer Überdrucksicherung.

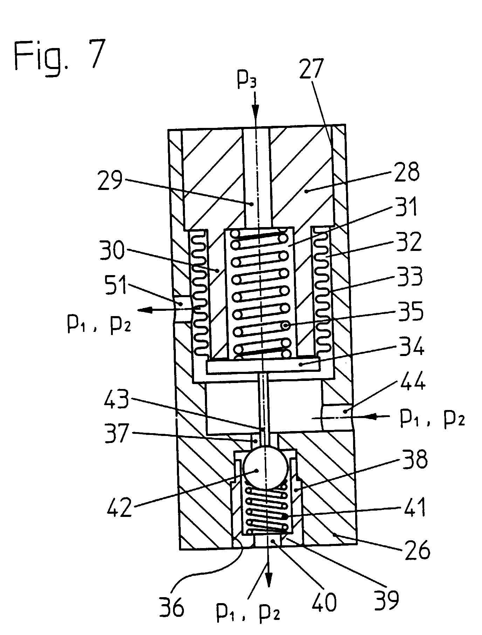

Die in Figur 7 dargestellte Variante ist vom Aufbau her ähnlich der Variante von Figur 4. Jedoch ist auch hier eine zweite seitliche Öffnung 51 im Gehäuse 26 vorhanden, und der Verbindungskanal 37 ist so gestuft ausgebildet, daß die Platte 34 beim Abheben von dem Rohrabschnitt 30 dichtend in den Verbindungskanal 37 einfährt. Dadurch werden die beiden zuvor verbundenen Öffnungen 51 und 44, an die jeweils eine Zuführ- bzw. eine Abführleitung eines Systemdruckes P₁ oder P₂ angeschlossen ist, voneinander getrennt und der Kältemittelkreislauf unterbrochen. Das von der Öffnung 44 zuströmende Kältemittel wird über die Öffnung 40 abgelassen.

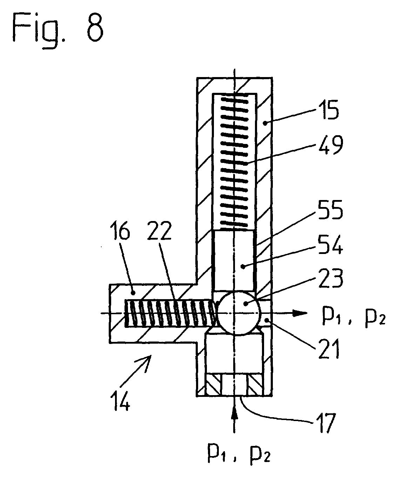

Die in Figur 8 dargestellte Variante stimmt weitgehend mit der Variante von Figur 2 überein. Es ist jedoch das eine Ende des Rohrabschnittes 15, an dem sich eine Druckfeder 49 abstützt, geschlossen ausgebildet. Dafür ist um die zu einem Kolben 54 erweiterte Platte ein Ringraum 55 gebildet, dessen Durchtrittsquerschnitt so klein gewählt ist, daß er als Drossel wirkt. Nimmt der Systemdruck P₁, P₂ ab, so kann kein schneller Druckausgleich zwischen den beiden Seiten des Kolbens stattfinden. Wegen des gesunkenen Systemdruckes P₁, P₂ wird der Kolben 54 daher gegen den Schließkörper 23 bewegt, so daß dieser verschoben und die Ausgangsöffnung 21 freigegeben wird. Das Kältemittel des zuvor verschlossenen Kältekreislaufes 12 kann dadurch über die Öffnung 21 in den Außenraum 3 abgeblasen werden. Die schwache Feder 49 dient dazu, daß bei Druckausgleich zwischen den beiden Seiten des Kolbens 54 dieser am Schließkörper 23 anliegt, ihn aber nicht verschiebt.

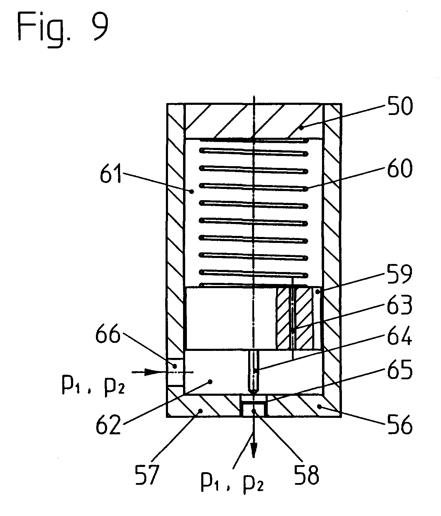

Figur 9 zeigt eine Variante mit einem rohrförmigen Gehäuse 56, in dessen eines Ende ein Stopfen 50 dichtend eingesetzt ist. Am anderen Ende weist das Gehäuse 56 eine Stirnwand 57 mit einer zentralen Öffnung 58 auf. In dem Gehäuse 56 ist ein Kolben 59 dichtend geführt, an dem eine Druckfeder 60 angreift, die sich andererseits an dem Stopfen 28 abstützt. Zur Verbindung der beiden durch den beweglichen Kolben 59 in dem Gehäuse 56 gebildeten Räume 61 und 62 ist in dem Kolben 59 ein Drosselkanal 63 vorhanden. Auf der nicht von der Feder 60 belasteten Seite weist der Kolben 59 einen zentralen Stift 64 auf, der gegen eine in die Öffnung 58 eingesetzte Berstscheibe 65 gerichtet ist. Außerdem ist auf dieser Seite des Kolbens 59 in einer Seitenwand des Gehäuses 56 eine Öffnung 66 vorgesehen.

Die Öffnung 66 wird mit dem Kältekreislauf 12 verbunden, und zwar wiederum mit der Niederdruckseite oder der Hochdruckseite. Die Öffnung 58 steht dagegen mit dem Außenraum 3 in Verbindung. Die Federkraft der Feder 60 ist so ausgebildet, daß bei normalem Systemdruck P₁, P₂ die Berstscheibe 65 durch den Stift 64 des Kolbens 59 nicht belastet wird. Sinkt nun der Systemdruck P₁, P₂ plötzlich, so kann kein schneller Druckausgleich zwischen dem Federraum 61 und dem Druckraum 62 beiderseits des Kolbens 59 stattfinden. Der Kolben 59 wird daher in Richtung auf die Öffnung 58 verschoben, so daß der Stift 64 an der Berstscheibe 65 angreift und diese zerstört. Über die dadurch freigegebene Öffnung 58 wird das Kältemittel in den Außenraum 3 abgeführt. Durch entsprechende Ausgestaltung der Berstscheibe 65 kann diese auch als Überdrucksicherung dienen.

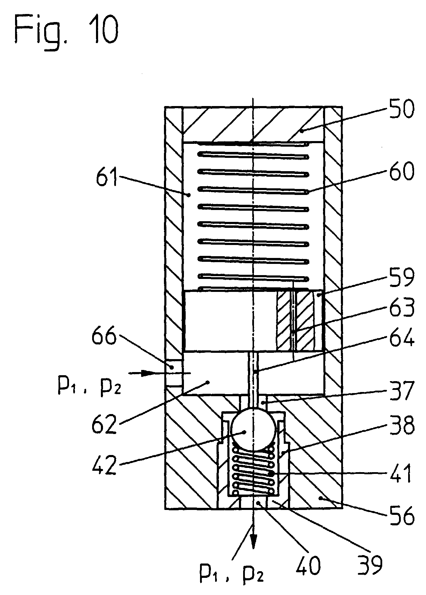

Die in Figur 10 dargestellte Variante stimmt mit der Variante von Figur 9 weitgehend überein. Anstelle der Berstscheibe 65 ist hier lediglich wieder ein federbelasteter Schließkörper 42 vorgesehen, der einen Verbindungskanal 37 zwischen dem Druckraum 62 des Kolbens 59 und einer Ausgangsöffnung 40 verschließt. Die Funktionsweise ist dieselbe wie die bei der zuvor beschriebenen Variante.

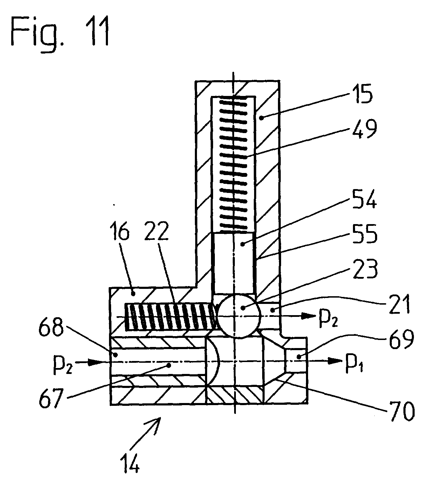

Figur 11 ist eine Variante ähnlich der Variante von Figur 8. Im Unterschied zu dort ist hier jedoch parallel zu dem Rohrstutzen 16 ein Verbindungskanal 67 zwischen der Hochdruckseite und der Niederdruckseite des Kältekreislaufes 12 vorhanden, der über eine Eingangsöffnung 68 und eine Ausgangsöffnung 69 an den Kältekreislauf 12 anschließbar ist. Vor der Austrittsöffnung 69 ist dabei ein Ventilsitz 70 ausgebildet, in welchen der Schließkörper 23 von dem Kolben 54 dichtend eingeschoben wird, wenn der Systemdruck P₂ schnell abfällt. Damit wird die Verbindung zwischen Hochdruckseite und Niederdruckseite gesperrt und nur die Hochdruckseite mit der Austrittsöffnung 21 zum Ablassen des Kältemittels verbunden. Die Funktionsweise ist im übrigen dieselbe wie bei der Variante von Figur 8.

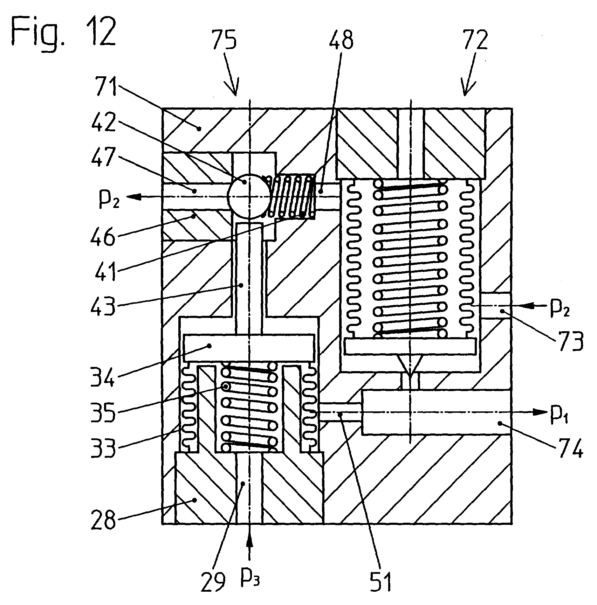

Das in Figur 12 dargestellte Expansionsorgan umfaßt in einem Gehäuse 71 einen Hochdruckregler 72, der im Prinzip beliebig ausgebildet sein kann. Der Hochdruckregler 72 regelt den Durchfluß von Kältemittel zwischen einem Hochdruckeingang 73 und einem Niederdruckausgang 74. Neben dem Hochdruckregler 72 umfaßt das Gehäuse 71 eine Schnellablaßvorrichtung 75, wie sie in Figur 5 dargestellt ist. Die erste Eingangsöffnung 48 ist direkt an die Hochdruckseite des Hochdruckreglers 72 angeschlossen. Ebenso ist die zweite Eingangsöffnung 51 direkt an die Niederdruckseite des Hochdruckreglers 72 angeschlossen. Fällt der Systemdruck P₁ auf der Niederdruckseite ab, so wird der Schließkörper 42 verschoben und die Ausgangsöffnung 47 freigegeben. Das Kältemittel kann dadurch von der Hochdruckseite in den Außenraum 3 abströmen.

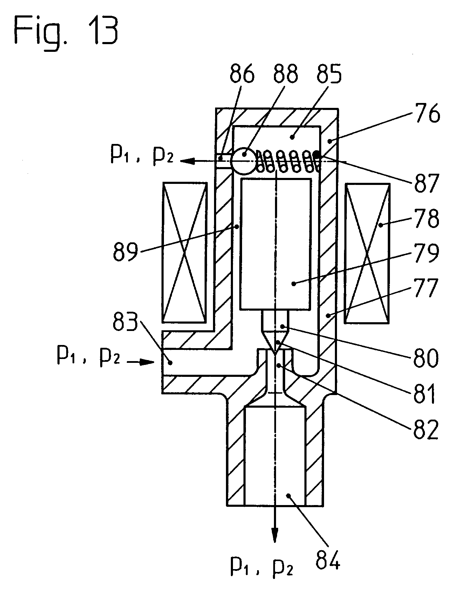

Das in Figur 13 gezeigte Expansionsorgan umfaßt ein Gehäuse 76 mit einem einseitig geschlossenen rohrförmigen Abschnitt 77, der von einer Magnetspule 78 umgeben ist. In dem rohrförmigen Abschnitt 77 ist ein Magnetanker 79 verschiebbar geführt. Der Magnetanker 79 trägt einen Stift 80, der mit seiner Spitze 81 in eine Drosselöffnung 82 dichtend einfahren kann, die zwischen einer seitlichen Öffnung 83 im Gehäuse 76 für den Hochdruckanschluß und einer in Bewegungsrichtung des Magnetankers 79 gelegenen Austrittsöffnung 84 für den Niederdruckanschluß angeordnet ist. Auf der anderen Seite des Magnetankers 79 ist ein Raum 85 gebildet, der über eine seitliche Öffnung 86 im Gehäuse 76 mit dem Außenraum 3 in Verbindung steht. Von einer Druckfeder 87 wird ein Schließkörper 88 gegen die seitliche Öffnung 86 dichtend gepreßt. Über den Ringraum 89 zwischen Magnetanker 79 und Gehäuse 76 ist der Raum 85 mit der Eingangsöffnung 83 des Gehäuses 76 verbunden.

Der Öffnungsquerschnitt der Drosselöffnung 82 wird durch die Stellung des Magnetankers 79 bestimmt, die ihrerseits durch den durch die Magnetspule 78 fließenden Strom bestimmt wird. Die Anordnung ist dabei so gewählt, daß der Magnetanker 79 bei maximalem Öffnungsquerschnitt der Drosselöffnung 82 im Normalbetrieb den Schließkörper 88 nicht belastet.

Durch Erhöhen des Spulenstromes über den dieser Maximalöffnung entsprechenden Wert bewegt sich der Magnetanker 79 in den Raum 85 und verschiebt den Schließkörper 88, so daß die Austrittsöffnung 86 freigegeben wird. Über den Ringraum 89 zwischen Magnetanker 79 und Gehäuse 76 kann nun Kältemittel sowohl von der Hochdruckseite über die Eingangsöffnung 83 als auch von der Niederdruckseite über die Ausgangsöffnung 84 zu der Ausgangsöffnung 86 strömen, da die Drosselöffnung 82 vollständig geöffnet ist. Das Kältemittel kann somit schnell in den Außenraum 3 abgeführt werden.

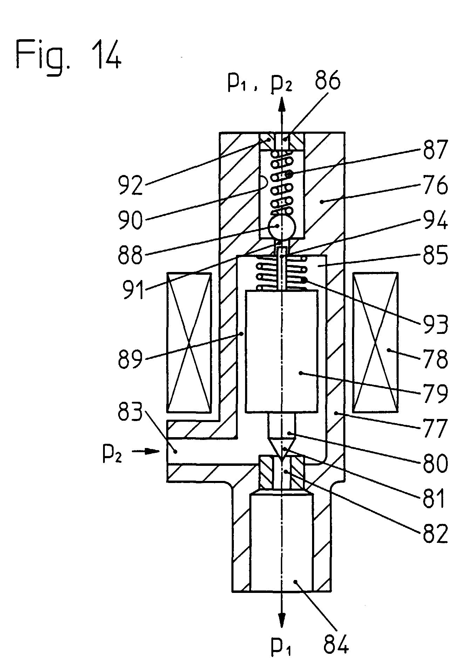

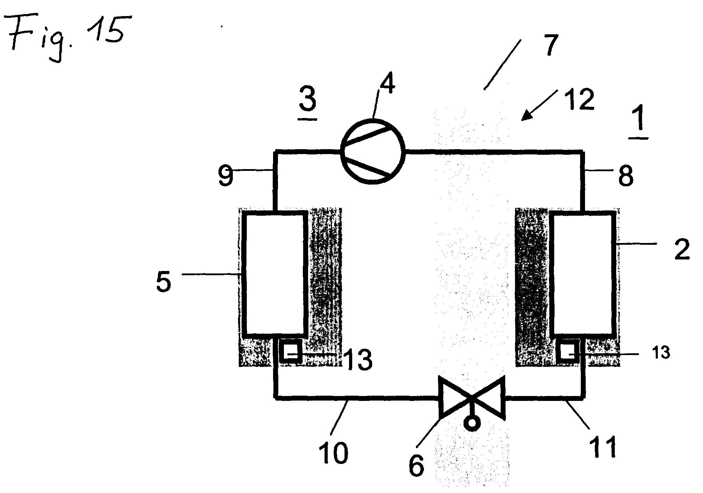

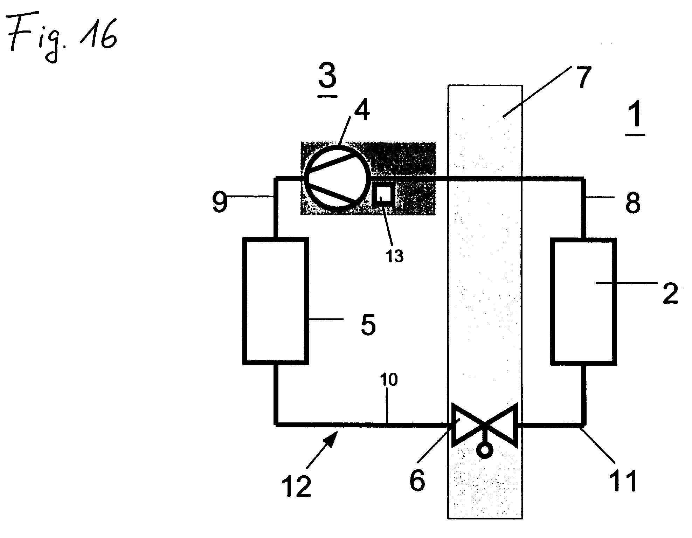

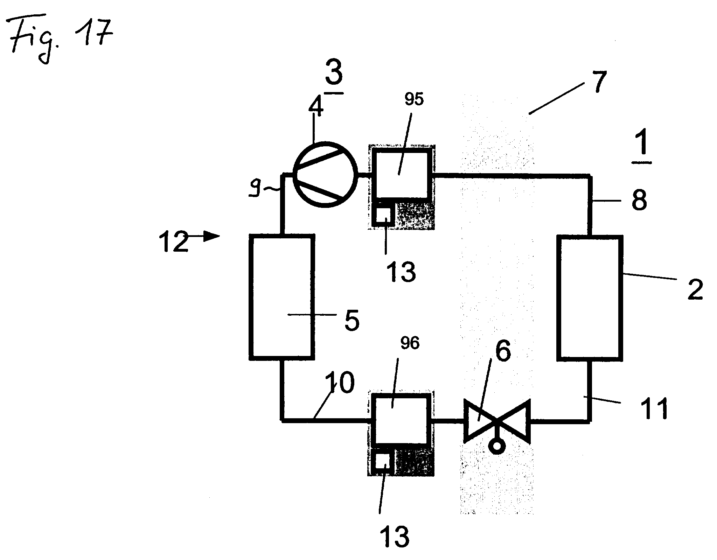

Die in Figur 14 dargestellte Variante ist ähnlich der Variante von Figur 13. Das Gehäuse 76 umfaßt hier jedoch auf der der Drosselöffnung 82 abgewandten Seite des Magnetankers 79 eine Ausnehmung 90, die mit dem Raum 85 über einen kurzen Kanal 91 verbunden ist. Der Schließkörper 88 wird durch die Feder 87 gegen den Kanal 91 gepreßt, wobei sich die Feder 87 mit ihrem anderen Ende an einer Ringscheibe 92 abstützt, die in das äußere Ende der Ausnehmung 90 eingesetzt ist. Die Ringscheibe 92 bildet nun die Austrittsöffnung 86, die mit dem Außenraum 3 verbunden ist.

Auf der zum Schließkörper 88 weisenden Seite trägt der Magnetanker 79 einen zweiten Stift 94, der gegen den Schließkörper 88 gerichtet ist. Außerdem ist im Raum 85 eine Feder 93 vorhanden, die sich einerseits an dem Magnetanker 79 und andererseits an dem Gehäuse 76 abstützt.

Über die Magnetspule 78 wird wieder wie zuvor der Querschnitt der Drosselöffnung 82 eingestellt. Dabei ist die Anordnung so getroffen, daß bei maximalem Drosselquerschnitt im Normalbetrieb der Schließkörper 88 nicht durch den Stift 91 des Magnetankers 79 belastet wird. Wird der Strom durch die Magnetspule 78 demgegenüber erhöht, bewegt sich der Magnetanker 79 in den Raum 85 und verschiebt den Schließkörper 88, so daß der Kanal 91 geöffnet wird. Nun kann Kältemittel von der Eingangsöffnung 83 und von der Ausgangsöffnung 84 über den Ringraum 89, den Kanal 91 und die Ausgangsöffnung 93 in den Außenraum 3 entweichen.

Die Kraft der Feder 90 ist außerdem so gewählt, daß der Schließkörper 88 bei Überschreiten eines Maximalwertes des Systemdrucks P₂ von dem Kanal 91 abhebt und diesen freigibt. In einer solchen Überdrucksituation wird also das Kältemittel über den Kanal 91 in den Außenraum 3 abgeblasen. Ansonsten schließt der Schließkörper 88 den Kältekreislauf 12 gegenüber dem Außenraum 3 ab.

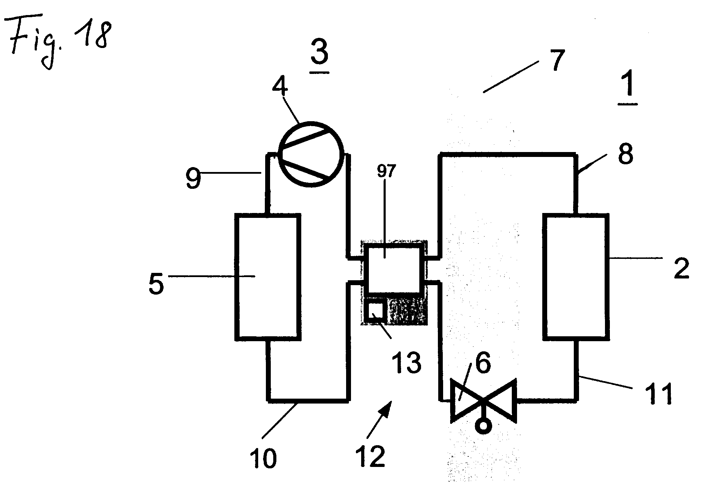

Die Figuren 15 bis 19 zeigen weitere Klimaanlagen, bei denen die Schnellablaßvorrichtungen 13 in verschiedene Bauelemente des Kältekreislaufs 12 integriert sind. So ist in Figur 15 jeweils eine Schnellablaßvorrichtung 13 in den Verdampfer 2 und in den Kondensator 5 integriert. Bei der Variante von Figur 16 ist eine Schnellablaßvorrichtung 13 in den Verdichter 4 integriert. Bei der Variante von Figur 17 weist der Kältekreislauf 12 zusätzlich einen Akkumulator 95 und einen Receiver 96 auf, in die jeweils eine Schnellablaßvorrichtung 13 integriert ist. Diese Sammelgefäße 95 und 96 können dabei auch einen Filter und einen Trockner beinhalten.

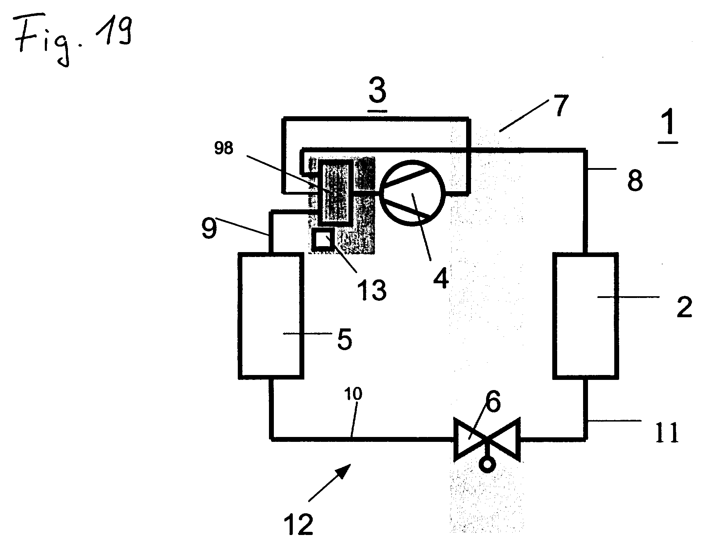

Bei der in Figur 18 dargestellten Variante umfaßt der Kältekreislauf 12 einen inneren Wärmetauscher 97, in dem eine Schnellablaßvorrichtung 13 integriert ist. Figur 19 zeigt eine Variante, bei der der Kältekreislauf 12 ein Umkehrventil 98 einer Wärmepumpe umfaßt, welches insbesondere durch ein Vier-Wege-Umkehrventil oder durch zwei Drei-Wege-Ventile realisiert sein kann. Wie dargestellt, ist in dieses Umkehrventil 98 eine Schnellablaßvorrichtung 13 integriert.

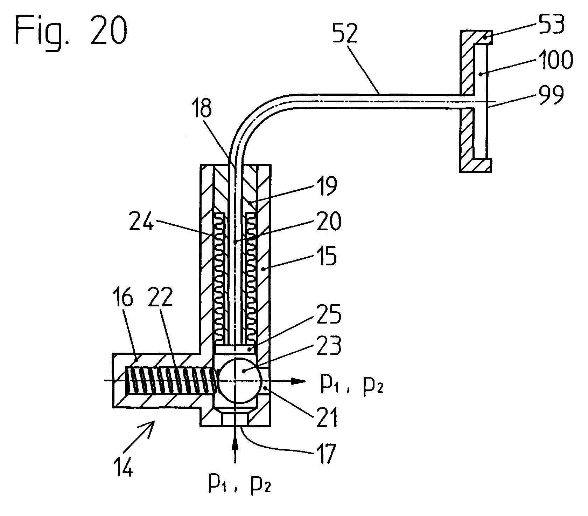

Figur 20 zeigt noch eine Variante zu Figur 2, bei welcher an die Eingangsöffnung 18 über eine Verbindungsleitung 52 ein mechanischer Kältemittelsensor 53 angeschlossen ist. Der Kältemittelsensor 53 umfaßt eine kältemitteldurchlässige Membrane 99, durch die ein Raum 100 verschlossen wird. In dem Raum 100 befindet sich ein Medium, das sich bei Aufnahme von Kältemittel ausdehnt. Der Raum 100 ist über die Verbindungsleitung 52 mit der Eingangsöffnung 18 verbunden.

Der Kältemittelsensor 53 wird in der Umgebung des Verdampfers, in den Luftkanälen oder im Fahrzeuginnenraum angebracht. Steigt die Kältemittelkonzentration dort infolge einer Leckage oder eines Schadens an, so diffundiert Kältemittel durch die Membrane 99 in den Raum 100 und wird von dem Medium aufgenommen. Dadurch dehnt sich das Medium aus. Da die Membrane 99 und der Kältemittelsensor 53 eine hohe Steifigkeit aufweisen, dehnt sich das Medium durch die Verbindungsleitung 52 in die Durchgangsöffnung 20 aus und expandiert den Federbalg 24. Dadurch drückt die Platte 25 gegen den Schließkörper 23, und die Ausgangsöffnung 21 wird freigegeben.

Die beschriebenen Varianten können grundsätzlich alle miteinander kombiniert werden. Insbesondere kann die Art der Auslösung der Schnellablaßvorrichtungen untereinander ausgetauscht oder untereinander kombiniert werden. Auch kann das Auslösen in Abhängigkeit von anderen Parametern, beispielsweise über Kältemittelsensoren erfolgen. Als Referenzdruck kann jeweils der Druck des Außenraumes oder auch ein anderer Referenzdruck verwendet werden. Außerdem können bei allen Varianten Niederdruckseite und Hochdruckseite gegeneinander vertauscht werden. Die dargestellten Federbalge können jeweils durch eine Membrane ersetzt werden.

In allen Fällen ergibt sich eine wenig aufwendige und dennoch betriebssichere Schnellablaßvorrichtung, mit welcher bei Fahrzeugklimaanlagen verhindert werden kann, daß die Insassen des Fahrzeuges durch ausströmendes Kältemittel im Falle einer Leckage oder eines sonstigen Schadens gefährdet werden.

### Bezugszeichenliste

- 1: Innenraum
- 2: Verdampfer
- 3: Außenraum
- 4: Verdichter
- 5: Kondensator
- 6: Expansionsorgan
- 7: Trennwand
- 8: Verbindungsleitung
- 9: Verbindungsleitung
- 10: Verbindungsleitung
- 11: Verbindungsleitung
- 12: Kältekreislauf
- 13: Schnellablaßvorrichtung
- 14: Gehäuse
- 15: Rohrabschnitt
- 16: Rohrstutzen
- 17: Eingangsöffnung
- 18: Eingangsöffnung
- 19: Stopfen
- 20: Durchgangsöffnung
- 21: Ausgangsöffnung
- 22: Druckfeder
- 23: Schließkörper
- 24: Federbalg
- 25: Platte
- 26: Gehäuse
- 27: Ausnehmung
- 28: Stopfen
- 29: Durchgangsöffnung
- 30: Rohrabschnitt
- 31: Fortsetzung von 29
- 32: Ringraum
- 33: Federbalg
- 34: Platte
- 35: Druckfeder
- 36: Ausnehmung
- 37: Kanal
- 38: Hülse
- 39: Innenbund
- 40: Ausgangsöffnung
- 41: Druckfeder
- 42: Schließkörper
- 43: Stift
- 44: Eingangsöffnung
- 45: Ausnehmung
- 46: Stopfen
- 47: Durchgangsöffnung
- 48: Eingangsöffnung
- 49: Druckfeder
- 50: Stopfen
- 51: Eingangsöffnung
- 52: Verbindungsleitung
- 53: Kältemittelsensor
- 54: Kolben
- 55: Ringraum
- 56: Gehäuse
- 57: Stirnwand
- 58: Ausgangsöffnung
- 59: Kolben
- 60: Druckfeder
- 61: Federraum
- 62: Druckraum
- 63: Drosselkanal
- 64: Stift
- 65: Berstscheibe
- 66: Eingangsöffnung
- 67: Verbindungskanal
- 68: Eingangsöffnung
- 69: Ausgangsöffnung
- 70: Ventilsitz
- 71: Gehäuse
- 72: Hochdruckregler
- 73: Hochdruckeingang
- 74: Niederdruckausgang
- 75: Schnellablaßvorrichtung
- 76: Gehäuse
- 77: Rohrabschnitt
- 78: Magnetspule
- 79: Magnetanker
- 80: Stößel
- 81: Spitze von 80
- 82: Drosselöffnung
- 83: Eingangsöffnung
- 84: Ausgangsöffnung
- 85: Kolbenraum
- 86: Ausgangsöffnung
- 87: Druckfeder
- 88: Schließkörper
- 89: Ringraum
- 90: Ausnehmung
- 91: Verbindungskanal
- 92: Scheibe
- 93: Druckfeder
- 94: Stift
- 95: Akkumulator
- 96: Receiver
- 97: innerer Wärmetauscher
- 98: Umkehrventil
- 99: Membran
- 100: Raum
- P₁: erster Systemdruck
- P₂: zweiter Systemdruck
- P₃: Referenzdruck

## Patentansprüche

1. Fahrzeugklimaanlage mit einem Kältekreislauf (12) zur Zirkulation eines Kältemittels zwischen einer Wärmeaufnahmestelle im Inneren (1) des Fahrzeuges und einer Wärmeabgabestelle im Außenraum (3) des Fahrzeuges oder umgekehrt,
dadurch gekennzeichnet,
daß mindestens eine Schnellablaßvorrichtung (13) vorgesehen ist zum Ablassen des Kältemittels aus dem Kältekreislauf (12) in den Fahrzeugaußenraum (3) sowie Mittel zur automatischen Betätigung der Schnellablaßvorrichtung (13) im Falle einer Beschädigung, insbesondere einer Leckage des Kältekreislaufs (12).

2. Fahrzeugklimaanlage nach Anspruch 1,
dadurch gekennzeichnet,
daß die Betätigungsmittel durch ein externes Steuersignal aktivierbar sind.

3. Fahrzeugklimaanlage nach Anspruch 2,
dadurch gekennzeichnet,
daß die Schnellablaßvorrichtung (13) ein elektromagnetisch betätigbares Ventil umfaßt oder mechanisch, insbesondere über eine kältemitteldurchlässige Membran aktivierbar ist.

4. Fahrzeugklimaanlage nach Anspruch 2 oder 3,
dadurch gekennzeichnet,
daß das Steuersignal durch einen Kältemittelsensor, einen Drucksensor oder einen Temperatursensor erzeugt wird, wobei das Steuersignal bevorzugt in Abhängigkeit vom Absolutwert und/oder der zeitlichen Änderung einer oder mehrerer Meßgrößen erzeugt wird.

5. Fahrzeugklimaanlage nach Anspruch 1,
dadurch gekennzeichnet,
daß die Schnellablaßvorrichtung (13) durch Absinken eines Systemdruckes (P₁, P₂) des Kältemittelkreislaufs (12) ausgelöst wird, wobei die Auslösung bevorzugt in Abhängigkeit vom Absolutwert oder von der Änderungsgeschwindigkeit des Systemdruckes (P₁, P₂) erfolgt.

6. Fahrzeugklimaanlage nach einem der vorhergehenden Ansprüche,
dadurch gekennzeichnet,
daß mindestens eine Schnellablaßvorrichtung (13) in ein Bauelement des Kältekreislaufes (12) wie Verdampfer (2), Kondensator (5), Verdichter (4), Receiver, Akkumulator, Trockner, und innerer Wärmetauscher integriert ist.

7. Fahrzeugklimaanlage nach einem der vorhergehenden Ansprüche,
dadurch gekennzeichnet,
daß mindestens eine Schnellablaßvorrichtung (13) mit einem Funktionselement (2, 4, 5, 6) des Kältekreislaufs (12), insbesondere einem Expansionsventil (6) oder einer Überdrucksicherung kombiniert ist, wobei das Expansionsventil (6) bevorzugt einen beweglichen Schließkörper (79) aufweist, über dessen Bewegung das Öffnen und Schließen der Schnellablaßvorrichtung (13) betätigbar ist.

8. Fahrzeugklimaanlage nach einem der vorhergehenden Ansprüche,
dadurch gekennzeichnet,
daß die Schnellablaßvorrichtung (13) an der Austrittsstelle des Kältemittels eine Venturi-Düse aufweist und/oder daß an der Austrittsstelle des Kältemittels eine Blende zum Ablenken des ausströmenden Kältemittels vorgesehen ist.

9. Fahrzeugklimaanlage nach einem der vorhergehenden Ansprüche,
dadurch gekennzeichnet,
daß die Schnellablaßvorrichtung (13) eine Leitung aufweist, die mit einem Ende an deren Ausgangsöffnung angeschlossen und mit dem anderen Ende zu einem erwärmen Fahrzeugteil wie Auspuffkrümmer oder Katalysator geführt ist.

10. Fahrzeugklimaanlage nach einem der vorhergehenden Ansprüche,
dadurch gekennzeichnet,
daß die Schnellablaßvorrichtung (13) als Feuerlöscher eingesetzt ist.
